# EUROPÄISCHE PATENTSCHRIFT

(11) **EP 1 139 511 B1**
(45) Veröffentlichungstag und Bekanntmachung des Hinweises auf die Patenterteilung: **16.04.2003**
(21) Anmeldenummer: 01103037.6
(22) Anmeldetag: 09.02.2001
(51) Int. Cl.: H01R 25/00

(54) **Steckdose**
Socket-outlet
Prise de courant

(30) Priorität: 31.03.2000 DE 20006029 U
(43) Veröffentlichungstag der Anmeldung: 04.10.2001
(73) Patentinhaber: Tehalit GmbH & Co. KG, D-67716 Heltersberg (DE)
(72) Erfinder: Kauf, Peter, Dipl.-Ing., 66482 Zweibrücken (DE); Schneckmann, Horst, 67705 Trippstadt (DE); Schmitt, Erwin, 67659 Kaiserslautern (DE); Aulmann, Manfred, Dipl.-Ing., 58579 Schalksmühle (DE); Langescheid, Thomas, Dipl.-Ing. (FH), 58579 Schalksmühle (DE)
(74) Vertreter: Patentanwälte Möll und Bitterich

(56) Entgegenhaltungen:
- EP-A- 0 240 916
- EP-A- 0 768 737
- DE-C- 4 309 453
- DE-C- 19 860 624

## Beschreibung

Die Erfindung betrifft Steckdosen mit drehbar montierten Steckertöpfen gemäß dem Oberbegriff des Anspruchs 1.

Aus der DE-C 43 09 453 sind Steckdosen gemäß dem Oberbegriff des Anspruchs 1 bekannt, bei denen die Steckertöpfe um 45° drehbar sind. Dank dieser Eigenschaft findet der Benutzer auch unter beengten Verhältnissen immer eine Position, in der er seinen Stecker problemlos in die Steckdose stecken kann.

Bei den bekannten Steckdosen erfolgt die Stromzuführung zu den drehbaren Steckertöpfen mit Litzen. Dabei muss sichergestellt sein, dass Funktionsfähigkeit und Isolierung der Litzen auch nach langjähriger Benutzung in vollem Umfang sichergestellt sind. Dies wird durch ausreichend lange Litzen und einen kleinen Drehwinkel der Steckertöpfe erreicht. Lange Litzen haben große Gehäuse zur Folge.

Oft besteht jedoch die Notwendigkeit, die Größe der Steckdosen zu begrenzen, beispielsweise weil in verbindlichen Normen festgehaltene Maße eingehalten werden müssen. Ein weiteres Beispiel für die Notwendigkeit, die Größenmaße zu begrenzen, sind Steckdosen, die in Leitungsführungskanäle eingebaut werden. Hier begrenzen die Maße der Leitungsführungskanäle die Außenmaße der Steckdosen.

Der vorliegenden Erfindung liegt die Aufgabe zugrunde, die Außenmaße einer Steckdose mit drehbaren Sleckertöpfen zu minimieren.

Diese Aufgabe wird gelöst durch eine Steckdose mit den Merkmalen des Anspruchs 1.

Der vorliegenden Erfindung liegt die Grundidee zugrunde, die Litzen, über die der elektrische Strom zu den drehbaren Steckertöpfen bzw. den darin fixierten Steck- und Erdungskontakten geleitet wird, so zu halten und zu führen, dass auch bei minimaler Länge derselben keine Beschädigungen auftreten und insbesondere die vorbeschriebenen Kriech- und Isolierstrecken eingehalten werden. Dies wird dadurch erreicht, dass die Halteplatten und die Verbindungsstege die Litzen in jeder Winkelstellung des drehbaren Steckertopfes so halten und führen, dass keine Knicke entstehen und keine Isolierungen verletzt werden. Darüber hinaus wirken die Halteplatten und Verbindungsstege gleichzeitig als zusätzliche Isolierung, so dass auf zusätzliche isolierende Luftstrecken, die die Außenabmessungen des Gehäuses vergrößem würden, verzichtet werden kann.

Gemäß einer Weiterbildung der Erfindung ist im Bereich des Schlitzes eine labyrintartige Zugentlastung für Litzen ausgebildet. Diese Zugentlastung sorgt zum einen für eine definierte Lage der Litzen im Bereich des Steckertopfes und sorgt für eine Entlastung der Verbindungsstelle zwischen Litze und Kontakt.

Gemäß einer Ausgestaltung der Erfindung besitzen die extemen Anschlusskontakte im Inneren des Gehäuses Anschlussfahnen zum Anschließen der Litze. Um die Längenmaße der Steckdose weiter reduzieren zu können, erstrecken sich diese Anschlussfahnen über die Halteplatten. In diesem Fall wird die Isolierfunktion der Halteplatten besonders deutlich wirksam.

Gemäß einer vorteilhaften Weiterbildung der Erfindung besteht der Steckertopf aus einem Oberteil und einem Unterteil, die unlösbar miteinander verrastet sind. Beim Verrasten werden die metallischen Steck- und Erdkontakte fixiert.

Um den Drehwinkel der Steckertöpfe auf 180° zu begrenzen, sind geeignet dimensionierte Begrenzungsnocken vorgesehen.

Anhand der Zeichnung soll die Erfindung in Form eines Ausführungsbeispiels näher erläutert werden. Es zeigen
- Fig. 1: eine Draufsicht auf eine Steckdose mit drehbaren Steckertöpfen, eingesetzt in einen Leitungsführungskanal,
- Fig. 2: eine Draufsicht auf die Unterseite der Steckdose mit abgenommenem Gehäuseboden,
- Fig. 3: eine Draufsicht auf die Unterseite eines Steckertopfes und
- Fig. 4: einen Längsschnitt durch einen Steckertopf in perspektivischer Darstellung.

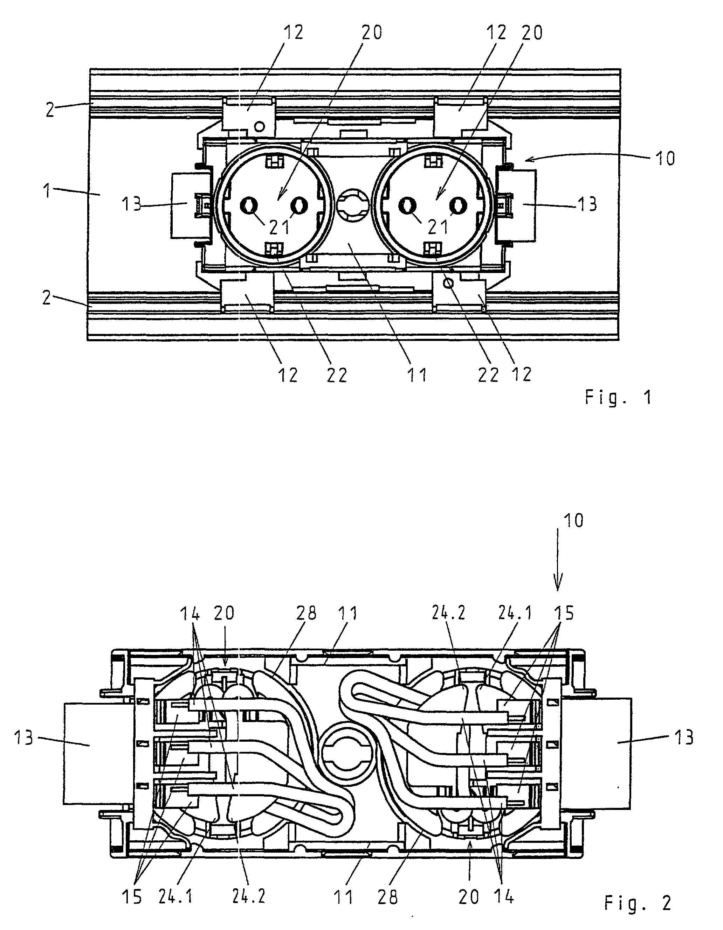

Fig. 1 zeigt einen Leitungsführungskanal 1, beispielsweise mit einem rechteckigen Querschnitt, dessen offene Vorderseite von zwei parallelen Deckelhalteprofilen 2 begrenzt ist. In den Leitungsführungskanal 1, 2 eingesetzt erkennt man eine Steckdose 10 mit zwei drehbaren Steckertöpfen 20. Die Steckertöpfe 20 sitzen in einem Gehäuse 11 aus Isolierstoff, welches mit Einrichtungen 12 versehen ist, die mit den Deckelhalteprofilen 2 des Leitungsführungskanals 1 korrespondieren.

An den Stirnseiten des Gehäuses 11 erkennt man Anschlusskontakte 13, an denen Phasenleiter, Nullleiter und Erdleiter eine Wechselstrom-Versorgungsleitung (nicht dargestellt) angeschlossen werden können.

Im Inneren des Gehäuses 11 besteht eine elektrische Verbindung zwischen den Anschlusskontakten 13 und den Steckkontakten 21 und Erdkontakten 22 der drehbaren Steckertöpfe 20.

Fig. 2 zeigt einen Blick in die offene Unterseite der Steckdose 10. Man erkennt das Gehäuse 11 mit den beiden endständigen Anschlusskontakten 13, die im Inneren des Gehäuses 11 Anschlussfahren 15 besitzen. Man erkennt femer die Unterseite der drehbaren Steckertöpfe 20. Schließlich erkennt man die Litzen 14, die einerseits an den Anschlussfahnen 15 der Anschlusskontakte 13, andererseits an den Steck- und Erdkontakten 21, 22 der Steckertöpfe 20 befestigt sind.

An den Steckertöpfen 20 angeformt Begrenzungsnocken 28 begrenzen den Drehwinkel der Steckertöpfe 20 auf jeden gewünschten Wert, hier auf 180°.

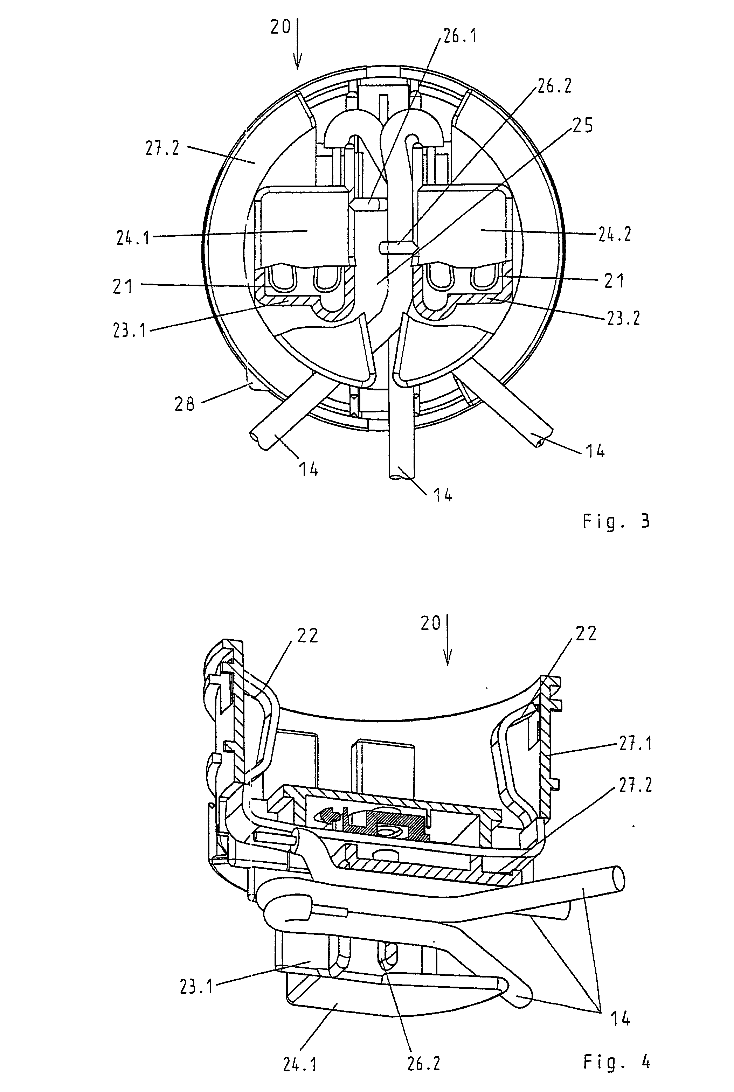

Fig. 3 zeigt einen Blick auf die Unterseite eines Steckertopfes 20. Der Steckertopf 20 besteht aus einem zweiteiligen Isolierstoffgehäuse, dessen Oberteil 27.1 und Unterteil 27.2 unlösbar miteinander verrastet sind, wobei gleichzeitig die metallischen Steckund Erdkontakte 21, 22 fixiert wurden. Man vergleiche Fig. 4.

An der Unterseite der Steckertöpfe 20 und mit Abstand hierzu sind mit Hilfe zweier Verbindungsstege 23.1, 23.2 zwei Halteplatten 24.1, 24.2 angeformt. Zwischen den beiden Verbindungsstegen 23.1, 23.2 bzw. den beiden Halteplatten 24.1, 24.2 ist ein Schlitz 25 mit einer labyrinta tigen Zugentlastung 26.1, 26.2 gebildet Die Litzen 14, deren Enden an den Steck- und Erdkontakten 21, 22 angeschweißt sind, sind durch den Schlitz 25 geführt, wobei sie von der Zugentlastung 26.1, 26.2, den Verbindungsstegen 23.1, 23.2 und den Halteplatten 24.1, 24.2 definiert geführt und gehalten werden. Die Verbindungsstege 23.1, 23.2 sind mit definierten Radien ausgeführt, so dass die Litzen 14 beim Drehen des Steckertopfes 20 nicht geknickt werden.

Die definierte Anordnung der Litzen 14 wird besonders deutlich in dem in Fig. 4 dargestellten Schnitt erkennbar.

Die Fig. 1 und 2 lassen erkennen, dass die Stirnseiten der Steckdosen 10 direkt an die drehbaren Steckertöpfe 20 eingrenzen. Dadurch müssen die Anschlussfahnen 15, an denen die Enden der Litzen 14 angeschweißt sind, die Steckertöpfe 20 überragen. Dabei stellen die Halteplatten 24.1, 24.2 die erforderliche Isolierung sicher.

## Patentansprüche

1. Steckdose (10), im wesentlichen umfassend
- ein Gehäuse (11) aus Isoliermaterial,
- wenigstens zwei Steckertöpfe (20),
- drehbar im Gehäuse (11) montiert
- und mit Steckkontakten (21) und/oder Erdkontakten (22) ausgerüstet,
- externe Anschlusskontakte (13) am Gehäuse (11)
- und Litzen (14), die einerseits an den externen Anschlusskontakten (13), andererseits an den Steck- und/oder Erdkontakten (21, 22) befestigt sind,
**gekennzeichnet durch** die Merkmale:
- an der Unterseite des Steckertopfes (20) sind mittels je eines Verbindungsstegs (23.1, 23.2) zwei Halteplatten (24.1, 24.2) angeformt,
- zwischen den Halteplatten (24.1, 24.2) besteht ein Schlitz (25) zur Aufnahme der Litzen (14),
- an den Verbindungsstegen (23.1, 23.2) sind Radien angeformt, die ein Knicken der Litzen (14) beim Drehen des Steckertopfes (20) verhindern.

2. Steckdose nach Anspruch 1, **gekennzeichnet durch** das Merkmal:
- im Bereich des Schlitzes (25) ist eine labyrintartige Zugentlastung (26.1, 26.2) für die Litzen (14) ausgebildet

3. Steckdose nach Anspruch 1 oder 2, **gekennzeichnet durch** die Merkmale:
- die externen Anschlusskontakte (13) besitzen im Inneren des Gehäuses (11) Anschlussfahnen (15) zum Anschließen der Litzen (14),
- die Anschlussfahnen (15) erstrecken sich über die Halteplatten (24.1, 24.2).

4. Steckdose nach einem der Ansprüche 1 bis 3, **gekennzeichnet durch** die Merkmale:
- der Steckertopf (20) besteht aus einem Oberteil (27.1) und einem Unterteil (27.2),
- Ober- und Unterteil (27.1, 27.2) sind unlösbar miteinander verrastet.

5. Steckdose nach einem der Ansprüche 1 bis 4, **gekennzeichnet durch** das Merkmal:
- Begrenzungsnocken (28) begrenzen den Drehwinkel des Steckertopfes (20) auf 180°.

6. Steckdose nach einem der Ansprüche 1 bis 5, **gekennzeichnet durch** das Merkmal:
- das Gehäuse (11) ist mit Einrichtungen (12) zum Befestigen in einem Geräteeinbaukanal (1, 2) ausgerüstet.

## Claims

1. Socket outlet (10), essentially comprising
- a housing (11) of insulating material,
- at least two connector shells (20),
- rotatably mounted in the housing (11)
- and provided with plug-in contacts (21) and/or earth contacts (22),
- external connection contacts (13) at the housing (11)
- and stranded conductors (14), which are fastened on one side to the external connection contacts (13), on the other side to the plug-in and/or earth contacts (21, 22),
**characterised by** the features:
- two retaining plates (24.1, 24.2) are moulded onto the underside of the connector shell (20) by means of a respective connecting web (23.1, 23.2),
- there is a slot (25) for accommodating the stranded conductors (14) between the retaining plates (24.1, 24.2),
- radii are moulded onto the connecting webs (23.1, 23.2) to prevent the stranded conductors (14) from bending when the connector shell (20) rotates.

2. Socket outlet according to Claim 1, **characterised by** the feature:
- a labyrinth-like strain relief device (26.1, 26.2) for the stranded conductors (14) is formed in the region of the slot (25).

3. Socket outlet according to Claim 1 or 2, **characterised by** the features:
- the external connection contacts (13) have connection lugs (15) for connecting the stranded conductors (14) in the interior of the housing (11),
- the connection lugs (15) extend over the retaining plates (24.1, 24.2).

4. Socket outlet according to any one of Claims 1 to 3, **characterised by** the features:
- the connector shell (20) consists of an upper part (27.1) and a lower part (27.2),
- the upper and the lower part (27.1, 27.2) are permanently interlocked.

5. Socket outlet according to any one of Claims 1 to 4, **characterised by** the feature:
- limiting protuberances (28) limit the angle of rotation of the connector shell (20) to 180°.

6. Socket outlet according to any one of Claims 1 to 5, **characterised by** the feature:
- the housing (11) is provided with devices (12) for fastening in appliance installation trunking (1, 2).

## Revendications

1. Prise de courant (10), comprenant pour l'essentiel :
- un boîtier (11) en matériau isolant,
- au moins deux renfoncements de prise (20) - montés de manière rotative dans le boîtier (11) et équipés de contacts à fiches (21) et/ou de contacts à la terre (22),
- des contacts de branchement externes (13) sur le boîtier (11)
- et des fils (14) qui sont fixés, d'une part, aux contacts de branchement externes (13), et d'autre part, aux contacts à fiches et/ou à la terre (21, 22),
**caractérisée en ce que** :
- deux plaques de retenue (24.1, 24.2) réalisées chacune à l'aide d'une barrette de raccordement (23.1, 23.2) sont prévues du côté inférieur du renfoncement de prise (20),
- une fente (25) se trouve entre les plaques de retenue (24.1, 24.2) pour recevoir les fils (14),
- des rayons empêchant le flambage des fils (14) lors de la rotation du renfoncement de prise (20) sont prévus au niveau des barrettes de raccordement (23.1, 23.2).

2. Prise de courant selon la revendication 1, **caractérisée en ce que** :
- un collier (26.1, 26.2) en forme de labyrinthe pour les fils (14) est formé dans la zone de la fente (25).

3. Prise de courant selon la revendication 1 ou 2, **caractérisée en ce que** :
- les contacts de branchement externes (13) possèdent des barrettes (15) à l'intérieur du boîtier (11) pour le raccordement des fils (14),
- les barrettes (15) s'étendent au-dessus des plaques de retenue (24.1, 24.2).

4. Prise de courant selon l'une quelconque des revendications 1 à 3, **caractérisée en ce que** :
- le renfoncement (20) se compose d'une partie supérieure (27.1) et d'une partie inférieure (27.2),
- les parties supérieure et inférieure (27.1, 27.2) sont enclenchées l'une dans l'autre de manière inamovible.

5. Prise de courant selon l'une quelconque des revendications 1 à 4, **caractérisée en ce que** des ergots de limitation (28) limitent l'angle de rotation du renfoncement de prise (20) à 180°.

6. Prise de courant selon l'une quelconque des revendications 1 à 5, **caractérisée en ce que** le boîtier (11) est équipé de dispositifs (12) destinés à fixer ce dernier dans un conduit d'installation d'appareil (1, 2).
